# EUROPEAN PATENT APPLICATION

(11) **EP 4 391 651 A1**
(43) Date of publication of application: **26.06.2024**
(21) Application number: 22857698.9
(22) Date of filing: 12.08.2022
(51) Int. Cl.: H04W 48/10

(54) **EMERGENCY SERVICE PROCESSING METHOD AND DEVICE AND READABLE STORAGE MEDIUM**

(30) Priority: 17.08.2021 CN 202110942104; 09.09.2021 CN 202111058172
(71) Applicant: Vivo Mobile Communication Co., Ltd., Dongguan, Guangdong 523863 (CN)
(72) Inventor: ZHANG, Pengfei, Dongguan, Guangdong 523863 (CN); KE, Xiaowan, Dongguan, Guangdong 523863 (CN); ZHANG, Yanxia, Dongguan, Guangdong 523863 (CN); KANG, Yanchao, Dongguan, Guangdong 523863 (CN)
(74) Representative: Lavoix
(86) International application number: PCT/CN2022/112139
(87) International publication number: WO 2023/020386

(57) **Abstract**

This application discloses an emergency service handling method and device and a readable storage medium, pertaining to the field of communication technologies. The method includes performing, by the terminal, a target operation in a case that the terminal satisfies a preset condition and needs to initiate an emergency service; where the preset condition includes one or more of the following: the terminal is capable of accessing SNPN; the terminal is in a non-SNPN access mode; and the terminal is unable to access any PLMN providing emergency services.

## Description

### CROSS-REFERENCE TO RELATED APPLICATIONS

This application claims priority to Chinese patent application No. 202111058172.0, filed in China on September 9, 2021 and claims priority to Chinese patent application No. 202110942104.4, filed in China on August 17, 2021, which is incorporated herein by reference in its entirety.

### TECHNICAL FIELD

Embodiments of this application relate to the field of communication technologies, and specifically to an emergency service handling method and device and a readable storage medium.

### BACKGROUND

If user equipment (User Equipment, UE, such as a terminal) is currently not in a stand-alone non-public network access mode (Stand-Alone Non-Public Network Access Mode, SNPN access mode) and having no public land mobile network (Public Land Mobile Network, PLMN) providing emergency services or no PLMN coverage, the UE cannot access the SNPN to obtain emergency services.

### SUMMARY

An object of embodiments of this application is to provide an emergency service handling method and device and a readable storage medium to solve the problem of UE being unable to access SNPN to obtain an emergency service when the UE is currently in a non-SNPN access mode and having no PLMN providing emergency services or no PLMN coverage.

According to a first aspect, an emergency service handling method is provided, including:
in a case that a terminal satisfies a preset condition and needs to initiate an emergency service, preforming, by the terminal, a target operation; where
the target operation is an operation of the terminal accessing SNPN, and the preset condition includes one or more of the following:
   the terminal is capable of accessing SNPN;
   the terminal is in a non-SNPN access mode; or
   the terminal is unable to access any PLMN providing emergency services.

According to a second aspect, an emergency service handling apparatus includes:
an execution module configured to perform a target operation in a case that a preset condition is satisfied and an emergency service needs to be initiated; where
the preset condition includes one or more of the following:
   the apparatus is capable of accessing SNPN;
   the apparatus is in a non-SNPN access mode; or
   the apparatus is unable to access any PLMN providing emergency services.

According to a third aspect, a terminal is provided, including a processor, a memory, and a program stored in the memory and capable of running on the processor, where when the program is executed by the processor, the steps of the method according to the first aspect are implemented.

According to a fourth aspect, a readable storage medium is provided, where the readable storage medium stores a program or instructions, and when the program or the instructions are executed by a processor, the handling method according to the first aspect is implemented.

According to a fifth aspect, a computer program product is provided, where the program product is stored in a non-transient storage medium, and the computer program product is executed by at least one processor so as to implement the steps of the handling method according to the first aspect.

According to a sixth aspect, a chip is provided, where the chip includes a processor and a communications interface, the communications interface is coupled to the processor, and the processor is configured to execute a program or instructions to implement the handling method according to the first aspect.

According to a seventh aspect, a communication device is provided, where the communication device is configured to perform the steps of the method according to the first aspect.

In the embodiments of this application, in a case that the UE satisfies at least one of being capable of accessing SNPN, being in a non-SNPN access mode, or being unable to access any PLMN providing emergency services, the UE performs a target operation to access SNPN to obtain emergency services.

### BRIEF DESCRIPTION OF DRAWINGS

FIG. 1 is a schematic structural diagram of a communications system according to an embodiment of this application;
FIG. 2 is a schematic flowchart of an emergency service handling method according to an embodiment of this application;
FIG. 3 is a schematic diagram of an application scenario according to an embodiment of this application;
FIG. 4 is a schematic structural diagram of an emergency service handling apparatus according to an embodiment of this application; and
FIG. 5 is a schematic structural diagram of a terminal according to an embodiment of this application.

### DETAILED DESCRIPTION OF EMBODIMENTS

The following clearly and completely describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application without creative efforts shall fall within the protection scope of this application.

The terms "first", "second", and the like in the specification and claims of this application are used to distinguish between similar objects rather than to describe a specific order or sequence. It should be understood that terms used in this way are interchangeable in appropriate circumstances so that the embodiments of this application can be implemented in other orders than the order illustrated or described herein. In addition, "first" and "second" are usually used to distinguish objects of a same type, and do not restrict a quantity of objects. For example, there may be one or a plurality of first objects. In addition, "and/or" in the specification and claims represents at least one of connected objects, and the character "/" generally indicates that the associated objects have an "or" relationship.

It is worth noting that the technology described in the embodiments of this application is not limited to long term evolution (Long Term Evolution, LTE)/LTE-Advanced (LTE-Advanced, LTE-A) systems, but may also be used in other wireless communication systems such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency division multiple access (Single-carrier Frequency-Division Multiple Access, SC-FDMA), and other systems. The terms "system" and "network" in the embodiments of this application are often used interchangeably, and the technology described herein may be used in the above-mentioned systems and radio technologies as well as other systems and radio technologies. However, a new radio (New Radio, NR) system is described as an example below, and NR-related terminology is used in most of the following descriptions. The technology may also be used for applications other than the NR system application, for example, in 6th (6^{th} Generation, 6G) communications systems.

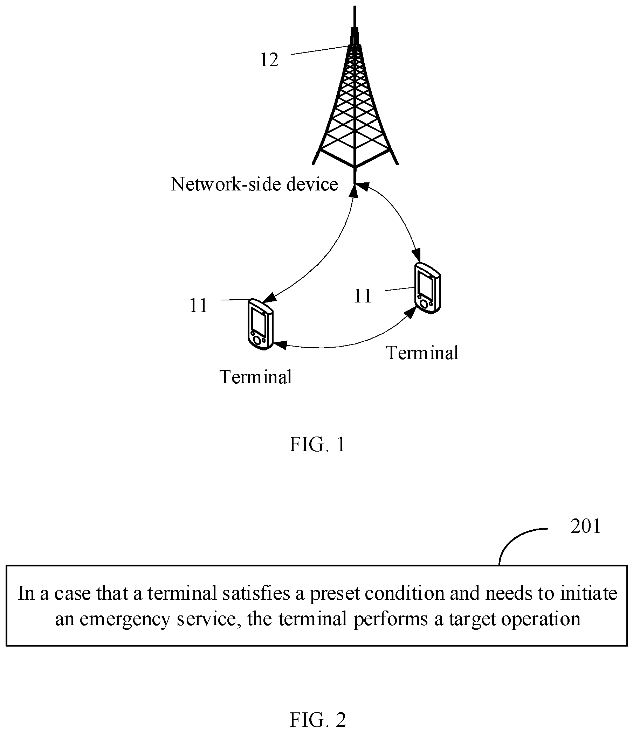

FIG. 1 is a block diagram of a wireless communications system to which the embodiments of this application are applicable. The wireless communication system includes a terminal 11 and a network-side device 12. The terminal 11 may also be referred to as a terminal device or user equipment (User Equipment, UE), and the terminal 11 may be a terminal-side device, such as a mobile phone, a tablet personal computer (Tablet Personal Computer), a laptop computer (Laptop Computer) or a notebook computer, a personal digital assistant (Personal Digital Assistant, PDA), a palmtop computer, a netbook, an ultra-mobile personal computer (Ultra-Mobile Personal Computer, UMPC), a mobile internet device (Mobile Internet Device, MID), augmented reality(Augmented Reality, AR)/(Virtual Reality, VR), robot, a wearable device (Wearable Device), vehicle user equipment (Vehicle User Equipment, VUE), pedestrian user equipment (Pedestrian User Equipment, PUE), or a smart home device (home device with wireless communication capabilities) such as refrigerators, televisions, washing machines, or furniture. The wearable device includes a smartwatch, a smart wristband, smart headphones, smart glasses, smart jewelry (smart bracelet, smart wristband, smart ring, smart necklace, smart anklet, smart ankle bracelet, and the like.), a smart wrist strap, smart clothing, a gaming device, and the like. It should be noted that a specific type of the terminal 11 is not limited in the embodiments of this application. The network-side device 12 may be a base station or a core network. The base station may be referred to as a NodeB, an evolved NodeB, an access point, a base transceiver station (Base Transceiver Station, BTS), a radio base station, a radio transceiver, a basic service set (Basic Service Set, BSS), an extended service set (Extended Service Set, ESS), a Node B, an evolved node B (eNB), a home NodeB, a home evolved NodeB, a wireless local area network (Wireless Local Area Network, WLAN) access point, a wireless fidelity (Wi-Fi) node, a transmission reception point (Transmitting Receiving Point, TRP), or some other appropriate terms in the art. The base station is not limited to a specific technical term as long as the same technical effect is achieved. It should be noted that the base station in the NR system is taken merely as an example in the embodiments of this application, but the base station is not limited to any specific type.

For better understanding the solution of the embodiments of this application, the following is first described:

In a case that no SNPN providing emergency services is available to UE in a stand-alone non-public network access mode (Stand-alone Non-Public Network access mode, SNPN access mode) and the UE is covered by a public land mobile network (Public Land Mobile Network, PLMN), the UE can stop operating in the SNPN access mode and attempt to access the PLMN to obtain emergency services.

UE in the SNPN access mode can access only SNPN cells.

Currently, SNPN can also provide emergency services.

The UE needs to enter the SNPN access mode, and when a current SNPN cell (cell) is a suitable cell (suitable cell), the UE performs emergency registration or initial registration to obtain emergency services.

The UE needs to enter the SNPN access mode and when the current SNPN cell is a non-acceptable cell (non-acceptable cell), meaning the UE is in a limited service state, the UE determines whether to access the SNPN to obtain emergency services, based on an indication (indication) broadcast by the SNPN as to whether or not it supports emergency services under the limited service state.

A method and apparatus provided in the embodiments of this application are described in the following through specific embodiments and application scenarios thereof with reference to the accompanying drawings.

Referring to FIG. 2, an embodiment of this application provides an emergency service handling method. The method may be executed by a terminal, and the specific steps are as follows.

Step 201. In a case that a terminal satisfies a preset condition and needs to initiate an emergency service, the terminal performs a target operation.

The preset condition includes one or more of the following:
(1) the terminal is capable of accessing SNPN;
(2) the terminal is in a non-SNPN access mode; or
(3) the terminal is unable to access any PLMN providing emergency services, for example, no PLMN is available providing emergency services or no PLMN coverage is available.

In the embodiment of this application, in a case that the UE satisfies at least one of being capable of accessing SNPN, being in a non-SNPN access mode, or having no PLMN providing emergency services, or having no PLMN coverage, the UE performs the operation of accessing SNPN to obtain emergency services.

In a possible implementation, the terminal performing the target operation includes:
(1) the terminal starts operating in an SNPN access mode; and
(2) the terminal attempts to access an SNPN cell.

In the embodiment of this application, in a case that the terminal satisfies the above preset condition, the terminal starts operating in the SNPN access mode and then attempts to access an SNPN cell, so as to access SNPN to obtain emergency services.

Optionally, the terminal stops operating in the SNPN access mode in a case that the first condition is satisfied; where the first condition includes at least one of the following: the emergency service of the terminal has been completed; and the emergency service of the terminal has been released. It can be understood that the terminal can stop operating in the SNPN access mode after the emergency service has been completed and/or the emergency service has been released.

Optionally, after stopping operating in the SNPN access mode, the terminal may attempt to access a PLMN cell.

Optionally, the terminal may alternatively directly attempt to access a PLMN cell in a case that the emergency service of the terminal has been completed or the emergency service of the terminal has been released.

In the above optional implementation, after the emergency service of the UE has been completed, operating in the SNPN access mode can stop, allowing the UE to camp on a PLMN cell to obtain services, instead of always camping on an SNPN cell.

In a possible implementation, the emergency service includes an emergency call service.

The method of this application is explained below with reference to a specific application scenario.

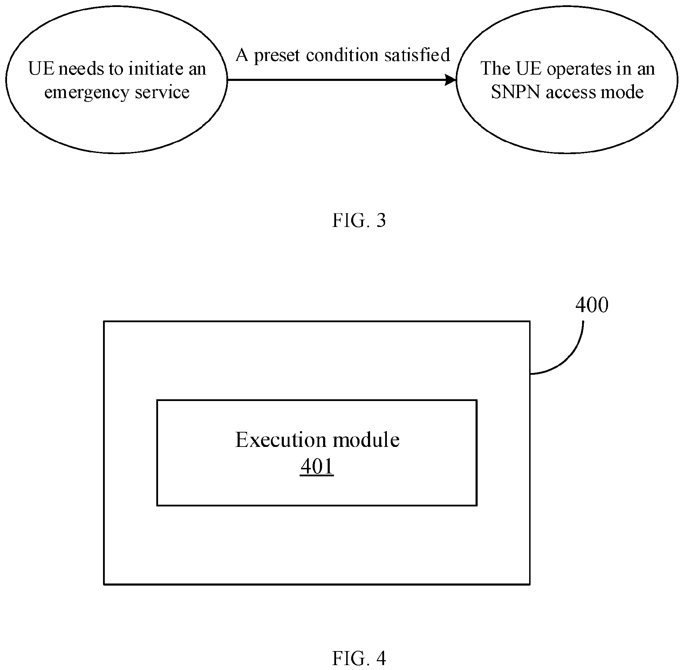

Referring to FIG. 3, when the UE needs to initiate an emergency service, if the preset condition is satisfied, the terminal starts operating in the SNPN access mode; and attempts to access an SNPN cell, allowing the UE to operate in the SNPN access mode to obtain the emergency service.

The above preset condition includes at least one of the following:
(1) the terminal is not in an SNPN access mode;
(2) the terminal is capable of accessing SNPN; or
(3) the terminal has no PLMN available providing emergency services.

It should be noted that the embodiment of this application is directed to scenarios where the terminal satisfies all of the above preset conditions (1) to (3).

Referring to FIG. 4, an embodiment of this application provides an emergency service handling apparatus 400. The apparatus 400 includes:
an execution module 401 configured to execute a target operation in a case that a preset condition is satisfied and an emergency service needs to be initiated.

The preset condition includes one or more of the following:
the apparatus is capable of accessing SNPN;
the apparatus is in a non-SNPN access mode; or
the apparatus is unable to access any PLMN providing emergency services.

In a possible embodiment, the execution module 401 is further configured to:
start operating in an SNPN access mode; and
attempt to access an SNPN cell.

In a possible implementation, the emergency service includes an emergency call service.

Optionally, the apparatus 400 further includes a determining module. The determining module is configured to determine that the preset condition is satisfied and an emergency service needs to be initiated.

Optionally, the apparatus 400 further includes a disabling module. The disabling module is configured to stop operating in the SNPN access mode in a case that a first condition is satisfied; The first condition includes at least one of the following: the emergency service of the apparatus has been completed; and the emergency service of the apparatus has been released. It can be understood that the apparatus 400 can stop operating in the SNPN access mode after the emergency service has been completed and/or the emergency service has been released.

Optionally, the apparatus 400 further includes an access module. The access module is configured to attempt to access a PLMN cell. It can be understood that the apparatus 400 may attempt to access a PLMN cell after the disabling module stop operating in the SNPN access mode.

The emergency service handling apparatus provided in the embodiment of this application is capable of implementing the processes implemented in the method embodiments in FIG. 2 and FIG. 3, with the same technical effects achieved. To avoid repetition, details are not described herein again.

The emergency service handling apparatus 400 in this embodiment of this application may be an apparatus or electronic device having an operating system, or may be a component, integrated circuit, or chip in a terminal. The apparatus or electronic device may be a mobile terminal or a non-mobile terminal. For example, the mobile terminal may include but is not limited to the types of the terminal 11 listed above, and the non-mobile terminal may be a server, a network attached storage (Network Attached Storage, NAS), a personal computer (Personal Computer, PC), a television (Television, TV), a teller machine, a self-service machine, or the like, which are not specifically limited in the embodiments of this application.

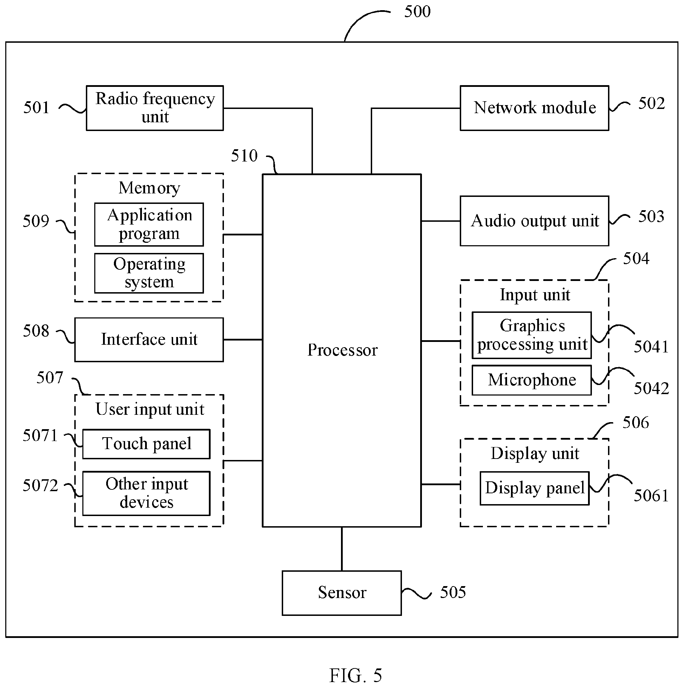

FIG. 5 is a schematic diagram of a hardware structure of a terminal for implementing an embodiment of this application.

The terminal 500 includes but is not limited to components such as a radio frequency unit 501, a network module 502, an audio output unit 503, an input unit 504, a sensor 505, a display unit 506, a user input unit 507, an interface unit 508, a memory 509, and a processor 510.

It can be understood by those skilled in the art that the terminal 500 may further include a power supply (for example, a battery) supplying power to the components. The power supply may be logically connected to the processor 510 via a power management system, so that functions such as charge management, discharge management, and power consumption management are implemented by using the power management system. The structure of the terminal shown in FIG. 5 does not constitute any limitation on the terminal, and the terminal may include more or fewer components than shown in the figure, or combine some of the components, or have different arrangements of the components. Details are not described herein.

It should be understood that in this embodiment of this application, the input unit 504 may include a graphics processing unit (Graphics Processing Unit, GPU) 5041 and a microphone 5042. The graphics processing unit 5041 processes image data of a static picture or a video that is obtained by an image capture apparatus (for example, a camera) in a video capture mode or an image capture mode. The display unit 506 may include a display panel 5061. The display panel 5061 may be configured in a form of a liquid crystal display, an organic light-emitting diode display, or the like. The user input unit 507 includes a touch panel 5061 and other input devices 5072. The touch panel 5061 is also referred to as a touchscreen. The touch panel 5061 may include two parts: a touch detection apparatus and a touch controller. The other input devices 5072 may include but are not limited to a physical keyboard, a functional button (such as a volume control button or a power on/off button), a trackball, a mouse, and a joystick. Details are not described herein.

In this embodiment of this application, the radio frequency unit 501 transmits downlink data received from a network-side device to the processor 510 for processing, and in addition, transmits uplink data to the network-side device. Generally, the radio frequency unit 501 includes but is not limited to an antenna, at least one amplifier, a transceiver, a coupler, a low noise amplifier, a duplexer, and the like.

The memory 509 may be configured to store software programs or instructions and various data. The memory 509 may include a program or instruction storage area and a data storage area. The program or instruction storage area may store an operating system, an application program or instructions required by at least one function (for example, a sound playback function or an image playback function), and the like. In addition, the memory 509 may include a high-speed random access memory, and may further include a non-volatile memory, where the non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory, for example, at least one disk storage device, flash memory device, or other non-volatile solid-state storage device.

The processor 510 may include one or more processing units. Optionally, an application processor and a modem processor may be integrated in the processor 510. The application processor primarily processes an operating system, user interfaces, application programs or instructions, and the like. The modem processor primarily processes radio communication, for example, being a baseband processor. It can be understood that the modem processor may alternatively be not integrated in the processor 510.

Specifically, in a case that the terminal satisfies a preset condition and needs to initiate an emergency service, the processor 510 enables the terminal to perform a target operation.

The preset condition includes one or more of the following:
the terminal is capable of accessing SNPN;
the terminal is in a non-SNPN access mode; or
the terminal is unable to access any PLMN providing emergency services.

In a possible implementation, the processor 510 is further configured to:
enable the terminal to start operating in an SNPN access mode; and
enable the terminal to attempt to access an SNPN cell.

In a possible implementation, the emergency service includes an emergency call service.

Optionally, the processor 510 is further configured to determine that the terminal satisfies a preset condition and needs to initiate an emergency service.

Optionally, the processor 510 is further configured to enable the terminal to stop operating in the SNPN access mode in a case that a first condition is satisfied; where the first condition includes at least one of the following: the emergency service of the terminal has been completed; and the emergency service of the terminal has been released. It can be understood that the terminal 500 can stop operating in the SNPN access mode after the emergency service has been completed and/or the emergency service has been released.

Optionally, the processor 510 is further configured to attempt to access a PLMN cell. It can be understood that the terminal 500 may attempt to access a PLMN cell after operating in the SNPN access mode stops.

In the embodiment of this application, in a case that the terminal satisfies the above preset condition, the terminal starts operating in the SNPN access mode and then attempts to access an SNPN cell, so as to access SNPN to obtain emergency services.

An embodiment of this application further provides a program product, where the program product is stored in a non-volatile storage medium, and the program product is executed by at least one processor to implement the steps of the method shown in FIG. 2 and FIG. 3.

An embodiment of this application further provides a readable storage medium. The readable storage medium stores a program or instructions. When the program or instructions are executed by a processor, each process of the foregoing method embodiment shown in FIG. 2 and FIG. 3 is implemented, with the same technical effect achieved. To avoid repetition, details are not described herein again.

The processor is a processor in the terminal described in the foregoing embodiment. The readable storage medium includes a computer-readable storage medium, such as a computer read-only memory (Read-Only Memory, ROM), a random access memory (Random Access Memory, RAM), a magnetic disk, or an optical disc.

An embodiment of this application further provides a chip. The chip includes a processor and a communication interface. The communications interface is coupled to the processor. The processor is configured to run a program or instructions for a network-side device, to implement the processes of the method embodiments shown in FIG. 2 and FIG. 3, with the same technical effects achieved. To avoid repetition, details are not described herein again.

It should be understood that the chip mentioned in the embodiments of this application may also be referred to as a system-level chip, a system chip, a chip system, a system-on-chip, or the like.

It should be noted that in this specification, the terms "include" and "comprise", or any of their variants are intended to cover a non-exclusive inclusion, such that a process, method, article, or apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element. Furthermore, it should be noted that the scope of the methods and apparatuses in the embodiments of this application is not limited to performing the functions in the order shown or discussed, but may also include performing the functions in a substantially simultaneous manner or in a reverse order depending on the functions involved. For example, the described methods may be performed in an order different from that described, and various steps may be added, omitted, or combined. In addition, features described with reference to some examples may be combined in other examples.

By means of the foregoing description of the implementations, persons skilled in the art may clearly understand that the method in the foregoing embodiment may be implemented by software with a necessary general hardware platform. Certainly, the method in the foregoing embodiment may also be implemented by hardware. However, in many cases, the former is a preferred implementation. Based on such an understanding, the technical solutions of this application essentially or the part contributing to the related art may be implemented in a form of a software product. The software product is stored in a storage medium (such as a ROM/RAM, a magnetic disk, or an optical disc), and includes several instructions for instructing a terminal (which may be a mobile phone, a computer, a server, an air conditioner, a network device, or the like) to perform the methods described in the embodiments of this application.

The embodiments of this application have been described above in conjunction with the accompanying drawings, but this application is not limited to the specific embodiments described above, which are merely schematic and not limiting, and the person of ordinary skill in the field may, under the inspiration of this application and without departing from the scope of the purpose of this application and the scope of the protection of the claims, make a lot of forms, which are all under the protection of this application.

## Claims

1. An emergency service handling method, comprising:
in a case that a terminal satisfies a preset condition and needs to initiate an emergency service, preforming, by the terminal, a target operation; wherein
the preset condition comprises one or more of the following:
the terminal is capable of accessing SNPN;
the terminal is in a non-SNPN access mode; or
the terminal is unable to access any public land mobile network PLMN providing emergency services.

2. The method according to claim 1, wherein the performing, by the terminal, a target operation comprises:
starting, by the terminal, operating in an SNPN access mode; and
attempting, by the terminal, to access an SNPN cell.

3. The method according to claim 2, wherein the method further comprises:
stopping, by the terminal, operating in the SNPN access mode in a case of satisfying a first condition; wherein
the first condition comprises at least one of the following:
an emergency service of the terminal has been completed; and
an emergency service of the terminal has been released.

4. The method according to claim 3, wherein the method further comprises:
attempting, by the terminal, to access a PLMN cell.

5. The method according to any one of claims 1 to 4, wherein the emergency service comprises an emergency call service.

6. An emergency service handling apparatus, comprising:
an execution module configured to perform a target operation in a case that a preset condition is satisfied and an emergency service needs to be initiated; wherein
the preset condition comprises one or more of the following:
the apparatus is capable of accessing SNPN;
the apparatus is in a non-SNPN access mode; or
the apparatus is unable to access any PLMN providing emergency services.

7. The apparatus according to claim 6, wherein the execution module is further configured to:
start operating in an SNPN access mode; and
attempt to access an SNPN cell.

8. The apparatus according to claim 7, wherein the apparatus further comprises a disabling module; wherein
the disabling module is configured to stop operating in the SNPN access mode in a case that a first condition is satisfied; wherein
the first condition comprises at least one of the following:
an emergency service of the apparatus has been completed; and
an emergency service of the apparatus has been released.

9. The apparatus according to claim 8, wherein the apparatus further comprises an access module; wherein
the access module is configured to attempt to access a PLMN cell.

10. The apparatus according to any one of claims 6 to 9, wherein the emergency service comprises an emergency call service.

11. A terminal, comprising a processor, a memory, and a program stored in the memory and capable of running on the processor, wherein when the program is executed by the processor, the steps of the method according to any one of claims 1 to 5 are implemented.

12. A readable storage medium, wherein the readable storage medium stores a program or instructions, and when the program or the instructions are executed by a processor, the steps of the method according to any one of claims 1 to 5 are implemented.

13. A chip, wherein the chip comprises a processor and a communications interface, the communications interface is coupled to the processor, and the processor is configured to execute a program or instructions to implement the steps of the method according to any one of claims 1 to 5.

14. A computer program product, wherein the computer program product is stored in a non-volatile storage medium, and the computer program product is executed by at least one processor so as to implement the steps of the method according to any one of claims 1 to 5.

15. A communication device configured to perform the steps of the method according to any one of claims 1 to 5.
